# FASCICULE DE BREVET EUROPEEN

(11) **EP 1 626 133 B1**
(45) Date de publication et mention de la délivrance du brevet: **30.08.2006**
(21) Numéro de dépôt: 04447221.5
(22) Date de dépôt: 06.10.2004
(51) Int. Cl.: E04B 1/94

(54) **Isolation multicouche**
Mehrschichtige Dämmung
Multilayered insulation

(43) Date de publication de la demande: 15.02.2006
(73) Titulaire: Aluthermo AG, 4790 Burg Reuland (BE)
(72) Inventeur: Jakobs, Lambert, 4780 Saint Vith (BE)
(74) Mandataire: Van Malderen, Michel

(56) Documents cités:
- EP-A- 0 718 447
- FR-A- 2 662 973
- FR-A- 2 805 295
- US-A- 4 405 682

## Description

### Objet de l'invention

La présente invention se rapporte à un isolant mince de type multicouche utilisé principalement en isolation thermique, ou encore en isolation acoustique sous chape flottante ou sous parquet.

### Etat de la technique

Les isolants multicouche minces sont connus depuis de nombreuses années et ont connu une évolution constante. Ils comportent une série de couches dont chacune est susceptible de posséder une fonction propre. Parmi les couches les plus utilisées figurent généralement des feuilles métalliques ou des films plastiques métallisés. Les feuilles métalliques, généralement de l'aluminium ont au moins trois fonctions bien distinctes. Elles sont destinés d'une part à renvoyer le rayonnement infrarouge et à former une barrière contre le feu et d'autre part à fournir une barrière contre la vapeur d'eau souvent nécessaire pour remédier aux gradients de concentration de vapeur d'eau entre l'air chaud et l'air froid.

La partie isolante intrinsèque des isolants multicouches minces sont souvent constitués de films à bulles d'air bien connues de l'homme de métier et parfois de mousses de polyéthylène. Ces différentes couches sont généralement assemblées de différentes manières telles que l'encollage ou le laminage partiel ou intégral à chaud des différentes surfaces.

Par isolant multicouche mince, on entend généralement une épaisseur globale inférieure à 30mm et plus particulièrement inférieure à 20mm. De préférence l'épaisseur globale est comprise entre 7 et 20mm.

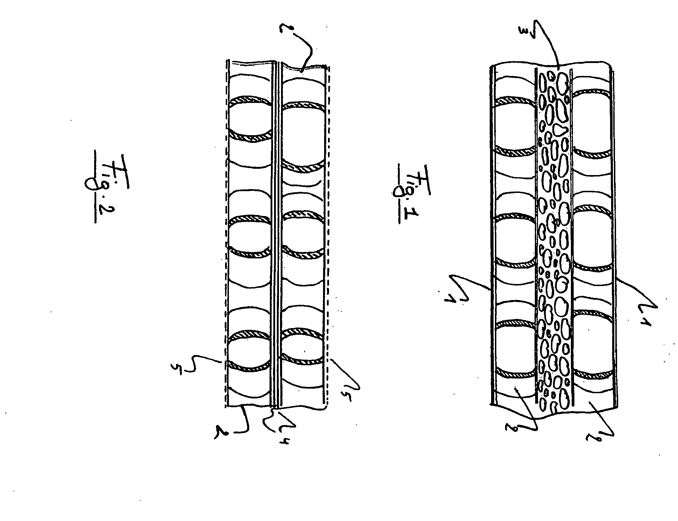

Le brevet européen EP 0 718 447 B1 de Michel Georges divulgue un matériau isolant comportant un sandwich formé par au moins deux films de matière synthétique renfermant des bulles d'air (film à bulles) recouverts sur au moins une de leurs faces externes par un revêtement de protection, généralement de l'aluminium ; les films étant rendus uniformément solidaires par un procédé de soudage à chaud sur l'ensemble de leur surface. Ce document divulgue également l'utilisation d'une couche de mousse de polyéthylène enfermée entre deux couches de films à bulles d'air dans un assemblage sandwich protégé par deux feuilles d'aluminium de 30µm se trouvant sur les faces extérieures de l'isolant multicouche. (voir Fig.1)

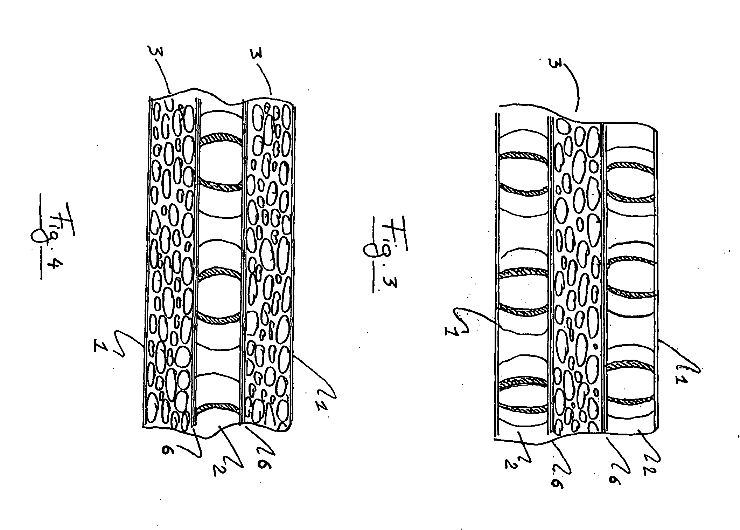

Le document WO 03/000494 déposé par la société Krona Industries Ltd divulgue un isolant multicouche essentiellement développé pour une bonne performance sur le plan de la résistance au feu avec des couches retardatrices de flammes essentiellement constituées de mat de fibre de verre imprégné de produit anti-feu. Ce complexe multicouche utilise par ailleurs des films à bulles d'air et des feuilles de polyester métallisées pour créer un effet réflecteur du rayonnement infrarouge. Ce document ne divulgue pas l'utilisation de mousse de polyéthylène en sandwich entre les films de polyester aluminisés ou encore l'utilisation de feuilles d'aluminium en tant que telles. (voir Fig.2)

Le document WO 98/10216 divulgue un isolant multicouche comportant deux couches isolantes sous forme de film à bulles ou de mousse de polyéthylène enfermées entre deux films de polyester métallisés possédant une couche d'aluminium vaporisée en surface. Les feuilles de polyester se trouvant à l'extérieur ont pour fonction de protéger l'aluminium de l'oxydation, cette fonction leur fait néanmoins perdre immédiatement une partie de la basse émissivité dont bénéficient les feuilles d'aluminium sans couche de protection

### Buts de l'invention

La présente invention vise à présenter un isolant multicouche combinant à la fois les effets bénéfiques de la mousse de polyéthylène et des films à bulles d'air sur l'isolation acoustique et thermique avec l'utilisation d'au moins quatre films d'aluminium représentant à la fois une barrière multiple au rayonnement infrarouge et à la vapeur d'eau ainsi qu'une barrière améliorée se traduisant par une résistance accrue au feu.

### Eléments caractéristiques de l'invention

La présente invention divulgue un isolant multicouche comportant deux feuilles d'aluminium sur ses faces extérieures et au moins trois couches isolantes incluant au moins un film à bulles d'air et au moins une mousse plastique, caractérisé en ce que ledit isolant comporte au moins deux feuilles d'aluminium supplémentaires, dites feuilles d'aluminium intérieures, séparant une ou plusieurs couches d'isolants, lesdites couches étant soudées ou encollées de façon homogène sur toute leur surface.

De préférence, ledit isolant comporte une partie centrale prise en sandwich entre deux couches extérieures, ladite couche centrale étant enfermée entre deux feuilles d'aluminium intérieures.

Dans une première forme d'exécution préférée, ladite couche centrale est une couche de films à bulles d'air et lesdites couches extérieures sont des mousses plastiques.

Dans une seconde forme d'exécution préférée, ladite couche centrale est une couche de mousse plastique et lesdites couches extérieures sont des couches de films à bulles d'air.

Dans une troisième forme d'exécution préférée, ladite couche centrale comporte deux couches de mousse plastique séparées par une feuille d'aluminium intérieure et lesdites couches extérieures sont des couches de films à bulles d'air.

Dans une quatrième forme d'exécution préférée, ladite couche centrale comporte deux couches de films à bulles d'air séparées par une feuille d'aluminium intérieure et lesdites couches extérieures sont des mousses plastiques.

De préférence, la mousse plastique est une mousse de polyéthylène. (LDPE, HDPE, LLDPE, VLDPE ou polyéthylène issu d'une catalyse métallocène).

De manière particulièrement préférée, ladite mousse de polyéthylène a une densité inférieure à 40kg/m³ ou à 30kg/m³.

Habituellement les feuilles d'aluminium extérieures ont une épaisseur comprise entre 10 et 50µm et de préférence entre 12 et 30µm.

Par ailleurs, les feuilles d'aluminium intérieures se trouvant au coeur dudit complexe multicouche ont une épaisseur comprise entre 5 et 10µm.

Selon l'invention, l'épaisseur du film à bulles d'air est comprise entre 2 et 20mm et plus particulièrement de 2 à 12 mm, de préférence entre 2 et 8mm.

D'autre part, l'épaisseur de la couche de mousse plastique est comprise entre 1 et 20mm, de préférence entre 1 et 10 mm et plus particulièrement entre 2 et 5mm.

Selon une autre caractéristique de l'invention, ladite mousse plastique et/ou le film à bulles d'air sont ignifugées par des ignifugeants classiques utilisés dans les matières plastiques.

Selon une forme de réalisation particulière de l'invention ladite mousse plastique et/ou le film à bulles d'air comportent des particules d'aluminium au sein de leur structure de matière plastique. Celles-ci représentent une barrière intrinsèque au rayonnement infrarouge.

Selon une autre forme de réalisation particulière de l'invention lesdits films d'aluminium appliqués à l'extérieur dudit isolant multicouche bénéficient d'un vernis de protection.

### Brève description des figures

La figure 1 représente un des isolants multicouche tel qu'ils sont divulgués dans l'état de la technique par le document EP 0 718 447 B1. Seul deux couches d'aluminium sont présentes sur les deux faces extérieures de l'isolant.

La figure 2 montre l'état de la technique d'un isolant multicouche tel que divulgué dans le document WO 03/000494 A1. L'extérieur de l'isolant est protégé par des fibres de verre ignifugées. L'intérieur de l'isolant comporte des films de polyester métallisés.

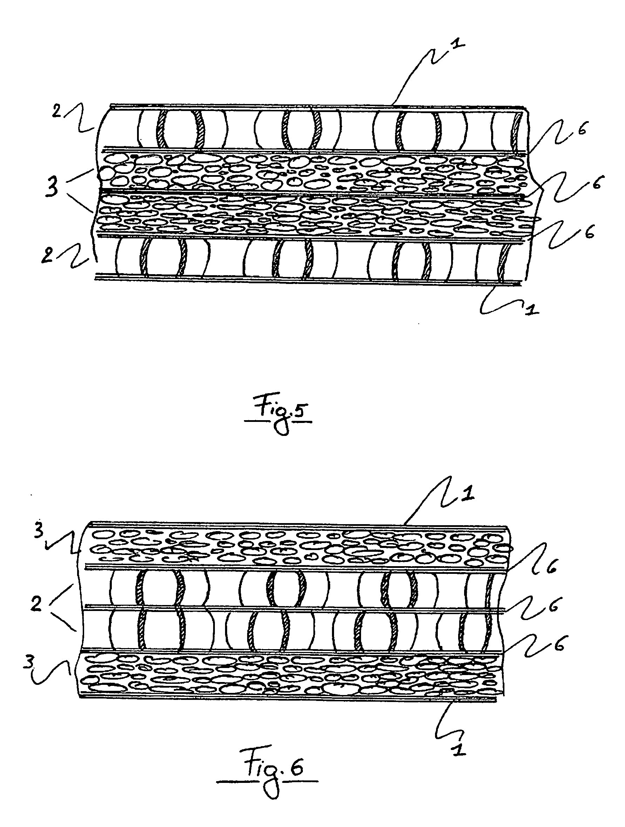

La figure 3 montre une première forme d'exécution d'un isolant multicouche selon la présente invention avec quatre feuilles d'aluminium protégeant à la fois l'extérieur et le coeur de l'isolant multicouche. L'isolant comporte deux couches de films à bulles et une couche de mousse plastique, de préférence de la mousse de polyéthylène.

La figure 4 montre une seconde forme d'exécution du multicouche selon la présente invention comportant quatre feuilles d'aluminium protégeant à la fois l'extérieur et le coeur de l'isolant multicouche. L'isolant comporte deux couches de mousses plastique, de préférence de la mousse de polyéthylène et une couche de film à bulles d'air.

La figure 5 montre une troisième forme d'exécution du multicouche selon la présente invention comportant cinq feuilles d'aluminium protégeant à la fois l'extérieur et le coeur de l'isolant multicouche. L'isolant comporte deux couches de mousses plastique séparées par une feuille d'aluminium intérieure, formant le coeur (la partie centrale) de l'isolant, de préférence de la mousse de polyéthylène et deux couches de film à bulles d'air.

La figure 6 montre une quatrième forme d'exécution du multicouche selon la présente invention comportant cinq feuilles d'aluminium protégeant à la fois l'extérieur et le coeur de l'isolant multicouche. L'isolant comporte deux couches de mousses plastique du côté extérieur, de préférence de la mousse de polyéthylène et deux couches de film à bulles d'air, séparées par une feuille d'aluminium intérieure, formant le coeur de l'isolant.

### Description détaillée de l'invention

Les isolants multicouche agissent sur les trois modes principaux de transfert de l'énergie, à savoir la conduction, la convexion et le rayonnement. Néanmoins, dans ce type d'isolation, l'accent est plus particulièrement mis sur la réflexion du rayonnement thermique. L'effet isolant contre le rayonnement thermique est obtenu par le pouvoir réfléchissant élevé et la basse émissivité de la feuille d'aluminium. Dans le domaine de la construction, ces isolants ont la propriété de renvoyer la chaleur à l'extérieur d'un bâtiment en été et de maintenir la chaleur générée à l'intérieur en hiver.

Par ailleurs, ces structures multicouche peuvent également former un bon isolant acoustique sous chape flottante ou sous parquet pour éviter les bruits de contact dans les pièces sous-jacentes. A cet effet, une diminution des bruits de contact peut être mesurée en fonction de la fréquence d'une source de bruit selon certaines normes dans les pièces sous-jacentes.

Jusqu'à présent, même si les feuilles d'aluminium réfléchissantes avaient été utilisées sur les faces extérieures des isolants multicouches pour réfléchir le rayonnement infrarouge et résister à une éventuelle attaque par le feu, les feuilles à bulles et les mousses de polyéthylène se trouvant à l'intérieur de l'élément sandwich étaient utilisées indifféremment pour l'isolation thermique ou acoustique.

L'inventeur s'est donc penché sur les fonctions particulières de chacune de ces couches et a découvert que au moins deux feuilles supplémentaires d'aluminium placées au coeur du multicouche et enfermant soit une couche de mousse plastique 3, de préférence de polyéthylène ou une couche de films à bulles d'air 2 était de nature à améliorer à la fois les propriétés acoustiques et les propriétés de résistance au feu sans pour autant altérer les propriétés d'isolation thermique.

Il est évident que plus l'épaisseur de la feuille aluminium extérieure 1 est élevée, mieux celle-ci résiste aux attaques du feu. Les épaisseurs généralement pratiquées se situent entre 10 et 50µm et plus particulièrement entre 12 et 30µm.

Les feuilles d'aluminium intérieures 6 se trouvant au coeur de la structure multicouche et enveloppant soit un ou plusieurs film à bulles d'air 2, soit une ou plusieurs couches de mousse plastique (polyéthylène) 3, peuvent avoir une épaisseur moindre. Celle-ci varie généralement entre 5 et 10µm. Le coeur de la structure multicouche peut lui aussi comporter une feuille d'aluminium séparant les deux couches isolantes de la partie centrale de l'isolant multicouche.

Les films à bulles 2 utilisés sont des films bien connus de l'homme de métier et peuvent se présenter sous différentes épaisseurs avec différentes dimensions de bulles. Les films à bulles 2 généralement réalisés en LDPE peuvent bien entendu également être réalisés dans d'autres matières. Parmi ces matières on peut citer sans être limitatif, le HDPE, le polystyrène, le polypropylène, etc.

Bien que les mousses utilisées au sein des isolants multicouche soient généralement des mousses de polyéthylène thermoplastiques ou réticulées, l'invention ne se limite pas uniquement à celles-ci. L'invention peut également être réalisée avec des isolants fabriqués à partir de billes moussées comme par exemple le polypropylène ou le polystyrène qui peuvent avantageusement remplacer les mousses de polyéthylène.

Les isolants peuvent également être ignifugés par des ignifugeants classiques utilisés couramment dans les matières plastiques comme par exemple les combinaisons chlore-brome/antimoine ou encore des anti-feu basés sur des mécanismes de carbonisation ou de passivation accélérée. Ceux-ci sont bien connus de l'homme de métier et disponibles dans le commerce.

Les mousses de polyéthylène pouvant être des mousses de polyéthylène thermoplastique ou de polyéthylène réticulé ont des densités entre 20 et 200kg/m³ et dans les cas des isolants thermiques ou acoustiques plutôt entre 20 et 40kg/m³. Les mousses de polyéthylène peuvent également contenir des particules d'aluminium dans les parois cellulaires. Lorsque les particules d'aluminium sont choisies parmi les particules plates (paillettes), celles-ci peuvent être complètement intégrées dans les parois cellulaires et également jouer le rôle de barrière au rayonnement infrarouge. Les particules choisies doivent avoir un grand pouvoir de recouvrement (supérieur à 20.000cm² par gramme sur l'eau), de cette manière elles s'étalent parfaitement sur les parois cellulaires ou les bulles.

Les film à bulles peuvent eux aussi être réalisés avec des particules d'aluminium intégrées renforçant encore le caractère de barrière contre le rayonnement thermique sans pour autant modifier la conductivité thermique de l'ensemble, car les particules sont complètement entourées de matière plastique et ne constituent donc pas un pont thermique. Le film à bulles peut aussi être un film métallisé en tant que tel sur une de ses faces.

Les différentes couches peuvent être laminées, c'est-à-dire soudées à chaud ou encore encollées entre elles. Pour avoir un résultat optimal notamment lors des découpes, ces différentes couches doivent être encollées ou laminées sur toute leur surface.

Il est évident que le concept du corps central entouré de deux films d'aluminium intérieurs 6, lui-même entouré de matière isolante et protégée à nouveau par des feuilles d'aluminium extérieures 1 peut être multiplié à l'infini et on pourrait par exemple reproduire deux ou plusieurs des structures multicouches divulgués dans la présente invention sans pour cela s'écarter du champ d'application de celle-ci. Les figures 5 et 6 présentent d'ailleurs une extension de ce concept de base ou la partie centrale est composée de deux couches, soit de films à bulles, soit de mousses plastiques, elles-mêmes séparées par une feuille d'aluminium intérieure.

Les avantages de la présente invention résident dans le fait que, par la multiplication des couches barrières en aluminium, la résistance au feu, et en particulier au percement par la flamme, est nettement améliorée. La carbonisation de la couche isolante sous-jacente, formant une barrière supplémentaire avant d'atteindre la couche d'aluminium suivante.

Par ailleurs, le rayonnement infrarouge est dorénavant complètement arrêté par la multiplication des couches d'aluminium qui fonctionnent comme un diélectrique et comme une barrière multiple à tout rayonnement électromagnétique.

Sur le plan acoustique, l'association entre la mousse de polyéthylène très flexible et une couche de film à bulles d'air donne une combinaison extrêmement performante car le film à bulles représente une combinaison idéale entre absorption d'énergie (effet nid d'abeille) et affaissement. On parvient ainsi à améliorer considérablement le comportement acoustique des planchers ou des chapes flottantes.

**Légende**
1. Feuille métallique extérieure (aluminium)
2. Film à bulles d'air
3. Mousse plastique (polyéthylène)
4. Film plastic métallisé
5. Fibres de verre
6. Feuille métallique intérieure (aluminium)

## Revendications

1. Isolant multicouche comportant deux feuilles d'aluminium (1) sur ses faces extérieures et au moins trois couches isolantes incluant au moins un film à bulles d'air (2) et au moins une mousse plastique (3), **caractérisé en ce que** ledit isolant comporte au moins deux feuilles d'aluminium supplémentaires, dites feuilles d'aluminium intérieures (6), séparant une ou plusieurs des couches isolantes, lesdites couches étant soudées ou encollées de façon homogène sur toute leur surface.

2. Isolant multicouche selon la revendication 1 **caractérisé en ce que** ledit isolant comporte une partie centrale prise en sandwich entre deux couches extérieures, ladite couche centrale étant enfermée entre deux feuilles d'aluminium intérieures (6).

3. Isolant multicouche selon la revendication 2 **caractérisé en ce que** ladite couche centrale est une couche de films à bulles d'air (2) et que lesdites couches extérieures sont des mousses plastiques (3).

4. Isolant multicouche selon la revendication 2 **caractérisé en ce que** ladite couche centrale est une couche de mousse plastique (3) et que lesdites couches extérieures (2) sont des couches de films à bulles d'air.

5. Isolant multicouche selon la revendication 2 **caractérisé en ce que** ladite couche centrale comporte deux couches de films à bulles d'air (2) séparées par une feuille d'aluminium intérieure (6) et que lesdites couches extérieures sont des mousses plastiques (3).

6. Isolant multicouche selon la revendication 2 **caractérisé en ce que** ladite couche centrale comporte deux couches de mousses plastiques (3) séparées par un film d'aluminium intérieur (6) et que lesdites couches extérieures sont des films à bulles d'air (2).

7. Isolant multicouche selon la revendication 1 **caractérisé en ce que** la mousse plastique (3) est une mousse de polyéthylène.

8. Isolant multicouche selon la revendication 7 **caractérisé en ce que** ladite mousse de polyéthylène a une densité inférieure à 40kg/m³.

9. Isolant multicouche selon la revendication 1 **caractérisé en ce que** les feuilles d'aluminium extérieures (1) ont une épaisseur comprise entre 10 et 50µm.

10. Isolant multicouche selon la revendication 1 **caractérisé en ce que** les feuilles d'aluminium intérieures (6) entourant la partie centrale dudit complexe multicouche ont une épaisseur comprise entre 5 et 10µm.

11. Isolant multicouche selon la revendication 1 **caractérisé en ce que** l'épaisseur du film à bulles d'air (2) est comprise entre 2 et 20mm.

12. Isolant multicouche selon la revendication 1 **caractérisé en ce que** l'épaisseur de la couche de mousse plastique (3) est comprise entre 1 et 20mm.

13. Isolant multicouche selon la revendication 1 **caractérisé en ce que** ladite mousse plastique (3) et/ou le film à bulles d'air (2) sont ignifugées.

14. Isolant multicouche selon la revendication 1 **caractérisé en ce que** ladite mousse plastique (3) et/ou le film à bulles d'air (2) comportent des particules d'aluminium au sein de leur structure de matière plastique.

15. Isolant multicouche selon la revendication 1 **caractérisé en ce que** lesdits films d'aluminium (1) appliqués à l'extérieur dudit isolant multicouche bénéficie d'un vernis de protection.

## Claims

1. Multilayer insulator comprising two aluminium foils (1) on its outer faces and at least three insulating layers including at least one film with air bubbles (2) and at least one plastic foam (3), **characterised in that** said insulator comprises at least two additional aluminium foils, called inner aluminium foils (6) separating one or several insulating layers, said layers being homogeneously welded or glued over their entire surfaces.

2. Multilayer insulator according to Claim 1, **characterised in that** said insulator comprises a central part sandwiched between two outer layers, said central layer being enclosed between two inner aluminium foils (6).

3. Multilayer insulator according to Claim 2, **characterised in that** said central layer is a layer of films with air bubbles (2) and **in that** said outer layers are plastic foams (3).

4. Multilayer insulator according to Claim 2, **characterised in that** said central layer is a layer of plastic foam (3) and **in that** said outer layers (2) are layers of films with air bubbles.

5. Multilayer insulator according to Claim 2, **characterised in that** said central layer comprises two layers of films with air bubbles (2) separated by an inner aluminium foil (6) and **in that** said outer layers are plastic foams (3).

6. Multilayer insulator according to Claim 2, **characterised in that** said central layer comprises two layers of plastic foams (3) separated by an inner aluminium film (6) and **in that** said outer layers are films with air bubbles (2).

7. Multilayer insulator according to Claim 1, **characterised in that** the plastic foam (3) is a polyethylene foam.

8. Multilayer insulator according to Claim 7, **characterised in that** said polyethylene foam has a density lower than 40kg/m³.

9. Multilayer insulator according to Claim 1, **characterised in that** the outer aluminium foils (1) have a thickness between 10 and 50µm.

10. Multilayer insulator according to Claim 1, **characterised in that** the inner aluminium foils (6) surrounding the central part of said multilayer complex have a thickness between 5 and 10µm.

11. Multilayer insulator according to Claim 1, **characterised in that** the thickness of the film of air bubbles (2) is between 2 and 20mm.

12. Multilayer insulator according to Claim 1, **characterised in that** the thickness of the plastic foam layer (3) is between 1 and 20mm.

13. Multilayer insulator according to Claim 1, **characterised in that** said plastic foam (3) and/or the film with air bubbles (2) are fire-proofed.

14. Multilayer insulator according to Claim 1, **characterised in that** said plastic foam (3) and/or the film with air bubbles (2) comprise aluminium particles within their plastic material structure.

15. Multilayer insulator according to Claim 1, **characterised in that** said aluminium films (1) applied to the outside of said multilayer insulator benefit from a protective varnish.

## Patentansprüche

1. Mehrlagiges Isoliermaterial, das zwei Aluminiumfolien (1) auf seinen Außenseiten und mindestens drei Isolierschichten mit mindestens einer Luftblasenfolie (2) und mindestens einem Kunststoffschaum (3) umfasst, **dadurch gekennzeichnet, dass** das besagte Isoliermaterial mindestens zwei zusätzliche Aluminiumfolien umfasst; diese innenliegenden Aluminiumfolien (6) trennen eine oder mehrere Isolierschichten, wobei diese Schichten vollflächig gleichmäßig verschweißt oder verklebt sind.

2. Mehrlagiges Isoliermaterial nach Anspruch 1, **dadurch gekennzeichnet, dass** das besagte Isoliermaterial einen Mittelteil umfasst, der sich sandwichartig zwischen zwei äußeren Schichten befindet, wobei die Mittelschicht zwischen zwei innenliegenden Aluminiumfolien (6) eingeschlossen ist.

3. Mehrlagiges Isoliermaterial nach Anspruch 2, **dadurch gekennzeichnet, dass** die besagte Mittelschicht eine Schicht aus Luftblasenfolie (2) ist und die beiden äußeren Schichten aus Kunststoffschaum (3) bestehen.

4. Mehrlagiges Isoliermaterial nach Anspruch 2, **dadurch gekennzeichnet, dass** die besagte Mittelschicht eine Schicht aus Kunststoffschaum (3) ist und die beiden äußeren Schichten aus Luftblasenfolie (2) bestehen.

5. Mehrlagiges Isoliermaterial nach Anspruch 2, **dadurch gekennzeichnet, dass** die besagte Mittelschicht zwei Schichten Luftblasenfolie (2) umfasst, die durch eine innenliegende Aluminiumfolie (6) voneinander getrennt sind, und dass die beiden äußeren Schichten aus Kunststoffschaum (3) bestehen.

6. Mehrlagiges Isoliermaterial nach Anspruch 2, **dadurch gekennzeichnet, dass** die besagte Mittelschicht zwei Schichten Kunststoffschaum (3) umfasst, die durch eine innenliegende Aluminiumfolie (6) voneinander getrennt sind, und dass die beiden äußeren Schichten aus Luftblasenfolie (2) bestehen.

7. Mehrlagiges Isoliermaterial nach Anspruch 1, **dadurch gekennzeichnet, dass** der Kunststoffschaum (3) ein Polyethylenschaum ist.

8. Mehrlagiges Isoliermaterial nach Anspruch 7, **dadurch gekennzeichnet, dass** der besagte Polyethylenschaum eine geringere Dichte als 40kg/m³ aufweist.

9. Mehrlagiges. Isoliermaterial nach Anspruch 1, **dadurch gekennzeichnet, dass** die äußeren Aluminiumfolien (1) eine Dicke zwischen 10 und 50 µm aufweisen.

10. Mehrlagiges Isoliermaterial nach Anspruch 1, **dadurch gekennzeichnet, dass** die inneren Aluminiumfolien (6), die den Mittelteil des besagten mehrlagigen Verbundstoffs umgeben, eine Dicke zwischen 5 und 10 µm aufweisen.

11. Mehrlagiges Isoliermaterial nach Anspruch 1, **dadurch gekennzeichnet, dass** die Dicke der Luftblasenfolie (2) zwischen 2 und 20 mm beträgt.

12. Mehrlagiges Isoliermaterial nach Anspruch 1, **dadurch gekennzeichnet, dass** die Dicke des Kunststoffschaums (3) zwischen 1 und 20 mm beträgt.

13. Mehrlagiges Isoliermaterial nach Anspruch 1, **dadurch gekennzeichnet, dass** der besagte Kunststoffschaum (3) und/oder die Luftblasenfolie (2) flammwidrig sind.

14. Mehrlagiges Isoliermaterial nach Anspruch 1, **dadurch gekennzeichnet, dass** der besagte Kunststoffschaum (3) und/oder die Luftblasenfolie (2) Aluminiumpartikel in ihrer Kunststoffstruktur enthalten.

15. Mehrlagiges Isoliermaterial nach Anspruch 1, **dadurch gekennzeichnet, dass** die besagten Aluminiumfolien (1), die außen auf das besagte mehrlagige Isoliermaterial aufgebracht wurden, einen Schutzlack erhalten.
